(19) Europäisches Patentamt
European Patent Office
Office européen des brevets

(11) EP 1 891 863 B1

## (12) EUROPEAN PATENT SPECIFICATION

(45) Date of publication and mention
of the grant of the patent:
**04.05.2016 Bulletin 2016/18**

(21) Application number: **07114506.4**

(22) Date of filing: **17.08.2007**

(51) Int Cl.:
*A23G 9/34* *(2006.01)*          *A23L 29/30* *(2016.01)*
*A23L 33/125* *(2016.01)*        *A23L 33/20* *(2016.01)*

(54) **Low sugar frozen confections**

Gefrorene Süßwaren mit niedrigem Zuckergehalt

Confections surgelées à teneur en sucre faible

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **21.08.2006 EP 06119258**

(43) Date of publication of application:
**27.02.2008 Bulletin 2008/09**

(73) Proprietors:
• **Unilever PLC
London
EC4Y 0DY (GB)**
Designated Contracting States:
**CY GB IE MT**
• **Unilever N.V.
3013 AL Rotterdam (NL)**
Designated Contracting States:
**AT BE BG CH CZ DE DK EE ES FI FR GR HU IS IT
LI LT LU LV MC NL PL PT RO SE SI SK TR**

(72) Inventors:
• **Eddies, Natalie, Elaine
Bedford, Bedfordshire MK44 1LQ (GB)**

• **Johannsen, Lena, Helmtraut, Annaluise, Gertrud
Bedford, Bedfordshire MK44 1LQ (GB)**
• **Wix, Loyd
Bedford, Bedfordshire MK44 1LQ (GB)**

(74) Representative: **Warner, Guy Jonathan
Unilver PLC
Unilever Patent Group
Colworth House
Sharnbrook
Bedford, Bedfordshire MK44 1LQ (GB)**

(56) References cited:
**EP-A- 0 933 029        WO-A2-2005/070183
US-A- 4 626 441        US-A- 4 675 200**

• **J. RUBEN ABRIL ET AL: 'Characteristics of
Frozen Desserts Sweetened with Xylitol and
Fructose' JOURNAL OF FOOD SCIENCE vol. 47,
no. 2, 01 March 1982, pages 472 - 475,
XP055178568 DOI:
10.1111/j.1365-2621.1982.tb10106.x ISSN:
0022-1147**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field of the invention

The present invention relates to frozen confections such as water ices. In particular, it relates to frozen confections having low sugar contents.

### Background

Frozen confections normally contain relatively high amounts of sugar. Parents are concerned about damage to their children's teeth as a result of consuming foods which contain sugars. Moreover, the incidence of obesity and the number of people considered overweight in countries where a so-called Western diet is adopted has drastically increased over the last decade. Since obesity and being overweight are generally known to be associated with a variety of diseases such as heart disease, type 2 diabetes, hypertension and arteriosclerosis, this increase is a major health concern for the medical world and for individuals alike. Furthermore, being overweight is considered by the majority of the Western population as unattractive. This has led to an increasing interest by consumers in their health and has created a demand for products that help to reduce or control daily caloric intake. In particular, the importance of limiting the content of sugars in a healthy diet has recently been highlighted by a Joint WHO/FAO Expert Committee (see "Diet, nutrition and the prevention of chronic diseases" - Report of a Joint WHO/FAO Expert Consultation, WHO Technical Report Series 916, WHO, Geneva, 2003).

Simply reducing the sugar content of frozen confections results in products that are too hard (because of the reduced freezing point depression) and insufficiently sweet-tasting. There have been previous attempts to formulate frozen confections having reduced sugar content whilst retaining their palatability. US 4,626,441 discloses dietetic frozen desserts which have essentially all the sugar present in conventional products replaced by an intense sweetener (e.g. aspartame) and a bullking agent (e.g. polydextrose). However, the use of intense sweeteners can result in the product being perceived as unnatural by some consumers, and may also give rise to an artificial or even unpleasant taste and/or aftertaste. US 4,400,405 discloses frozen dietetic desserts having a sweetening system having fructose, sorbitol and corn syrup (36DE or lower). However some sugar alcohols, including sorbitol, have a cooling effect and can cause digestive discomfort in some individuals. Thus, there remains a need for palatable frozen confections which contain reduced amounts of sugars, but which do not have the disadvantages associated with previous attempts.

### Definitions

Unless defined otherwise, all technical and scientific terms used herein have the same meaning as commonly understood by one of ordinary skill in the art (e.g. in frozen confectionery manufacture). Definitions and descriptions of various terms and techniques used in frozen confectionery manufacture are found in Ice Cream, 6th Edition, Robert T. Marshall, H. Douglas Goff and Richard W. Hartel (2003), Kluwer Academic/Plenum Publishers.

All percentages, unless otherwise stated, refer to the percentage by weight, with the exception of percentages cited in relation to the overrun.

Sugars

As used herein the term "sugars" refers exclusively to digestible mono- and di-saccharides. The total sugar content of a frozen confection is thus the sum of all of the digestible mono- and di-saccharides present within the frozen confection, including any sugars from fruits and lactose from milk solids.

Complex saccharides

As used herein, the term "complex saccharide" refers to oligosaccharides and polysaccharides with a degree of polymerisation (DP) of at least three.

Digestible and non-digestible saccharides

Digestible saccharides are defined as those saccharides with a metabolisable energy content of at least 3 kcal (12.6 kJ) per g of saccharide. Digestible complex saccharides are usually derived from starch and/or comprise alpha glycosidic linkages.

Non-digestible saccharides are defined as those saccharides with a metabolisable energy content of less than 3 kcal (12.6 kJ) per g of saccharide. Common non-digestible complex saccharides are non-starch complex saccharides but others include resistant starches and non-digestible di-saccharides.

Relative sweetness

As defined herein, relative sweetness, R, refers to the sweetness of a substance relative to the sweetness of an equivalent weight of sucrose (i.e. sucrose has a relative sweetness of 1).

Intense sweetener

Intense sweeteners are defined herein as those sweeteners having a relative sweetness, R, of greater than 10. Intense sweeteners include: aspartame, saccharin, acesulfame K, alitame, thaumatin, cyclamate, glycyrrhizin, stevioside, neohesperidine, sucralose, monellin and neotame. The relative sweetness of these intense sweeteners is given in Table 1.

Table 1

| Intense Sweetener (i) | Relative sweetness ($R_i$) |
| --- | --- |
| Aspartame | 200 |
| Saccharin | 400 |
| Acesulfame K | 200 |
| Alitame | 2,000 |
| Thaumatin | 2,000 |
| Cyclamate | 35 |
| Glycyrrhizin | 50 |
| Stevioside | 100 |
| Neohesperidine | 1,500 |
| Sucralose | 500 |
| Monellin | 2,000 |
| Neotame | 10,000 |

For a mixture of intense sweeteners, the relative sweetness, *R,* is defined by Equation 1:

$$R = \frac{\sum_i R_i m_i}{\sum_i m_i} \qquad (1)$$

wherein $m_i$ is the mass of intense sweetener i.

**Brief description of the invention**

We have found that frozen confections with low levels of sugars but with excellent palatability and texture can be formulated even without the use of intense sweeteners by employing maltitol and / or xylitol, digestible complex saccharides and non-digestible complex saccharides in specific amounts. Accordingly, in a first aspect, the present invention provides a frozen confection comprising (by weight of the confection):

- less than 9 wt% total digestible mono- and disaccharides;
- maltitol, xylitol or mixtures thereof in a total amount of from 2 to 15 wt%;
- from 5 to 25 wt% digestible complex saccharides;
- from 1 to 15 wt% non-digestible complex saccharides;

and less than *(X I R)* wt% of intense sweeteners,
wherein *X* is 2.0 wt% and *R* is the sweetness of the intense sweeteners relative to sucrose expressed on a weight basis, wherein the frozen confection is a water ice.

Preferably the frozen confection comprises less than 8 wt% total digestible mono- and disaccharides.

Preferably the frozen confection comprises from 8 to 15 wt% maltitol.

Preferably the frozen confection comprises from 5 to 10 wt% digestible complex saccharides.

Preferably the frozen confection comprises from 5 to 10 wt% non-digestible complex saccharides.

Preferably the non-digestible complex saccharide is selected from the group consisting of oligofructose, inulin, polydextrose, resistant starch and mixtures thereof.

Preferably *X* is 0.1 wt%

Preferably the frozen confection comprises less than 1 wt% fructose.

In a related aspect, the present disclosure provides a process for manufacturing a frozen confection according to the first aspect of the invention, the process comprising the steps of:

(a) preparing a mix of ingredients; then
(b) pasteurising and optionally homogenising the mix; then
(c) freezing and optionally aerating the mix to produce the frozen confection.

**Detailed Description**

In order to maximise the health benefits, the frozen confection contains less than 9% total sugars by weight of the confection, preferably less than 8%, more preferably less than 7%, most preferably less than 6%.

Maltitol is a sugar alcohol based on the disaccharide maltose. It has a high relative sweetness of 0.9 (i.e. only slightly less than sucrose). Xylitol is a sugar alcohol based on xylose. It also has a high relative sweetness, i.e. 0.8. Neither maltitol nor xylitol causes off flavours often associated with other polyols such as glycerol or sorbitol. Both maltitol and xylitol have relatively high digestive tolerance compared to other polyols.

In order to compensate for the low levels of sugars employed, it is necessary that the frozen confection comprises maltitol and / or xylitol in a total amount of at least 2% by weight of the frozen confection, preferably at least 4%, more preferably at least 6% and most preferably at least 8%. To avoid the risk of digestive intolerance however, it is necessary that maltitol and / or xylitol is used in a total amount of at most 15%, preferably at most 12%, more preferably at most 10%.

Since the maximum amount of maltitol and / or xylitol is 15%, maltitol / xylitol cannot completely compensate for the low levels of sugars employed, and it is necessary to have a further source of sweetness and freezing point depression. Therefore the frozen confection also comprises digestible complex saccharides in an amount of at least 5% by weight of the frozen confection, preferably at least 6%, more preferably at least 7%, most preferably at least 9%. However, to avoid the confection becoming overly hard, however, it is necessary that the digestible complex saccharide is used in an amount of less than 25%, preferably less than 20%, more preferably less than 15% and most preferably less than 12% or 10%.

The digestible complex saccharide may be sourced from any suitable material, such as glucose syrup (also known as "corn syrup"), modified starch or maltodextrin. It is preferred that the digestible complex saccharide is substantially sourced from a glucose syrup having a DE greater than 20. Particularly preferred are glucose syrups having a DE in the range 22 to 45 as they contain complex saccharides of not too high a molecular weight whilst not contributing large amounts of sugars. Most preferred are glucose syrups having a DE in the range 22 to 34. Most convenient are glucose syrups which comprise sugars in an amount of from 8 to 35% by dry weight of the glucose syrup, preferably from 10 to 25%.

However, in large amounts the digestible complex saccharide could cause the frozen confection to become hard and unpalatable owing to its relatively high molecular weight. Therefore, the frozen confection further comprises non-digestible saccharides, as such materials can contribute to the freezing point depression and/or body of the confection without increasing the sugar content of the confection or contributing to sweetness. The non-digestible saccharide is employed in an amount of at least 1% by weight of the frozen confection, preferably at least 2%, more preferably at least 3% and most preferably at least 5%. In order to avoid too much freezing point depression, the non-digestible saccharide is present in an amount of at most 15% by weight of the frozen confection, preferably at most 10%, more preferably at most 7%.

Suitable non-digestible complex saccharides include oligofructose, inulin, polydextrose, resistant starch and mixtures thereof. Oligofructose and inulin are both available from the ORAFTI company under the trade names Raftilose™ and Raftiline™, respectively. Inulin and oligofructose are composed of linear chains of fructose units linked by ß(2-1) bonds and often terminated by a glucose unit. Inulin contains chains with up to 60 fructose units. Oligofructose has between 2 and 7 fructose units. Oligofructose is obtained from inulin by partial enzymatic hydrolysis. Inulin has a metabolisable energy content (calorie conversion factor) of 1.2 kcal (5.0 kJ) g$^{-1}$, whilst oligfructose has a metabolisable energy content of 2 kcal (8.4 kJ) g$^{-1}$. Polydextrose is a randomly bonded condensation polymer of D-glucose with some bound sorbitol and citric acid. The 1,6-glycosidic linkage predominates in the polymer. Polydextrose is resistant to digestion in the human small intestinal tract and has a metabolisable energy content of 1.0 kcal (4.2 kJ) g$^{-1}$. It is available from Danisco under the trade name Litesse™. Polydextrose has a relatively high molecular weight of around 2500. Resistant starches are food starches or starch derivatives which are not digestible by the human body. There are four main groups of resistant starches: RS1, RS2, RS3 and RS4. RS1 is physically inaccessible starch, e.g. trapped in seeds. RS2 starch is granular starch. Examples include banana and high amylose starches. RS3 starch is a highly retrograded starch, e.g. extruded cereals. RS4 is chemically modified starch. Resistant starches have a metabolisable energy content of around 1.6 kcal (6.7 kJ) g$^{-1}$. Resistant starches are available commercially from National Starch under the trade names Novelose™ and Hi-maize™.

In order to maximise the nutritional quality of the confection it is necessary to limit the amount of sugars to less than 9 wt%. A certain level of sugars is usually present from other ingredients; for example lactose from skimmed milk powder, and sugars that make up a part of corn syrups. A low level of sugars, such as fructose, may also be added in order to provide more freezing point depression and contribute to the sweetness of the confection (fructose has a high relative sweetness). In one embodiment, the frozen confection further comprises from 1 % to 6% fructose by weight of the frozen confection, preferably from 2 to 5%. However, in order to minimize the amount of total sugars, in a preferred embodiment, the frozen confection comprises less than 1% fructose. The frozen confection may comprise one or more monosaccharides such as glucose (dextrose) or galactose, and / or one or more disaccharides such as lactose, maltose or sucrose, provided that the total sugar is less than 9% by weight of the confection.

We have found that frozen confections with low levels of sugars but with excellent palatability and texture can be formulated by employing maltitol and / or xylitol, digestible complex saccharides and non-digestible complex saccharides in specific amounts, thereby avoiding the use of intense sweeteners. The total amount of intense sweeteners, $C_T$ is given by $C_T < X / R$, wherein $X$ is 2.0 wt% and $R$ is the relative sweetness of the intense sweeteners. Preferably, $X$ is 1.0 wt%, more preferably 0.5 wt%, even more preferably 0.1 wt%, most preferably 0.01 wt%. In a particularly preferred embodiment the frozen confection contains no intense sweetener.

Frozen Confections

The frozen confection of the invention is a water ice. Ice cream typically contains, by weight of the composition, 5-18 % fat, 6-12 % non-fat milk solids (of which about one third is milk protein and about half is lactose), 12-18% other sugars together with other minor ingredients such as stabilisers, emulsifiers, colours and flavourings. Water ice typically contains, by weight of the composition 15-25% sugars together with stabilisers, colours and flavourings. Thus although ice creams and water ices have very different formulations, the amount of sugars present in each is similar. Thus the disclosure can be applied equally to ice creams, water ices and other frozen confections. In water ices according to the invention, the sugars found in a typical ice cream or water ice (such as sucrose) are replaced with maltitol and / or xylitol, digestible and non-digestible complex saccharides, so that the frozen confection comprises less than 9% sugars.

Frozen confections of the disclosure may comprise fat. In an preferred embodiment of the invention, the frozen confection has a fat content of at least 2%, preferably at least 4%, more preferably at least 7%; and at most 20%, preferably at most 15%, more preferably at most 12%. Suitable fats include, but are not limited to dairy fat, coconut oil, palm oil and sunflower oil.

Frozen confections of the disclosure may also comprise protein, preferably milk protein. Suitable sources of milk protein include milk, concentrated milk, milk powders, whey, whey powders and whey protein concentrates/isolates. In order to aid in emulsification and/or aeration during manufacture of the frozen confection it is preferable that the protein content is greater than 3% by weight of the frozen confection. In order to prevent the texture of the confection from becoming chalky, it is also preferable that the protein content is less than 8% by weight of the frozen confection.

Frozen confections of the invention may also comprise an emulsifier, such as mono- and di-glycerides of saturated or unsaturated fatty acids, lecithin and egg yolk. The frozen confections may also comprise a stabiliser, such as gelatine, locust bean gum, guar gum, agar, alganates, carrageenan, pectin, carboxymethyl cellulose, microcrystalline cellulose, dextran and xanthan. Preferably the emulsifier and stabiliser are each present at a level of 0.05 to 1% by weight of the frozen confection.

In addition, the frozen confection may contain flavouring and/or colouring, such as mint, vanilla, chocolate, coffee, or fruit flavours.

The frozen confection may be aerated or unaerated. By unaerated is meant an overrun of less then 20%, preferably less than 10%. An unaerated frozen confection is not subjected to deliberate steps such as whipping to increase the gas content. Nonetheless, it will be appreciated that during the preparation of unaerated frozen confections, low levels of gas, such as air, may be incorporated in the product.

Aerated frozen confections have an overrun of more than 20%, preferably more than 50%, more preferably more than 75%. Preferably the frozen confection has an overrun of less than 200%, more preferably less than 150%, most preferably less than 120%.

Overrun is defined by equation (2) and is measured at atmospheric pressure

$$\text{overrun \%} = \frac{\text{density of mix - density of frozen confection}}{\text{density of frozen confection}} \times 100 \qquad (2)$$

The frozen confections provided by the present invention afford consumers the everyday enjoyment of a popular food without delivering too high a sugar content. The frozen confections of this invention may also suitably provide a low sugar base for delivering nutritional actives. Thus in a preferred embodiment the frozen confection is fortified with one or more nutritional actives. The nutritional actives may be a mineral, a vitamin, a pro-biotic, a pre-biotic, an antioxidant, an essential oil, a plant sterol, an appetite suppressant, or a bioactive peptide.

The frozen confections of the present invention are particularly suitable for storage and consumption from the domestic deep freeze. Thus it is preferred that the temperature of the frozen confection is below -12°C, more preferably below -14°C and most preferably in the range -25 to -16°C. In this temperature range most, but not all, of the water is frozen.

The frozen confections may be manufactured by any suitable process, for example a process comprising the steps of:

(a) preparing a mix of ingredients; then
(b) pasteurising and optionally homogenising the mix; then
(c) freezing and optionally aerating the mix to produce the frozen confection.

The present invention will now be further described with reference to the following examples, which are illustrative only and non-limiting.

**Examples**

Examples 1-9 - Ice creams (not according to invention).

Example ice creams according to the invention, having low total sugar contents (from 5.3 to 7%) were prepared using maltitol, DE 28 corn syrup (which provides digestible complex saccharides) and inulin (which provides non-digestible complex saccharides). The ice creams were prepared using the base formulation shown in Table 2.

Table 2 Ice cream base formulation

| Ingredient | Amount (wt %) |
| --- | --- |
| Maltitol | Given in table 3 |
| Inulin | Given in table 3 |
| DE28 corn syrup | Given in table 3 |
| Coconut Oil | 9.0 |
| Skimmed Milk Powder | 7.36 |
| Emulsifier HP60 | 0.285 |
| Guar Gum | 0.062 |
| Locust Bean Gum | 0.145 |
| Carragenan | 0.0175 |
| Vanillin | 0.011 |
| Vanilla Flavour | 0.16 |
| Beta Carotene 30% | 0.0042 |
| Water | to 100 |

Maltitol was Maltisorb, supplied by Roquette, >99% pure. DE 28 corn (glucose) syrup was C*Dry™ GL 01924, supplied by Cerestar (France) and had a moisture content of 4 wt%. On a dry basis it consisted of 14 wt% sugars (consisting of 3% glucose and 11 % maltose) and 86 wt% digestible complex saccharides (consisting of 16.5% maltotriose and 69.5% higher saccharides). Inulin was Raftiline™ supplied by ORAFTI (Tienen, Belgium) and had a moisture content of 3.8 wt%. On a dry basis the inulin consisted of 92 wt% oligofructose and 8 wt% sugars (sucrose, fructose and glucose). Skimmed milk powder contained 50 wt% lactose, 35 wt% protein and 1 wt% milk fat with the remainder being ash and moisture. The emulsifier was Grinsted Mono-Di HP 60 supplied by Danisco (Babard, Denmark) and contained 98 wt% saturated fatty acids.

Nine different formulations were used: three different amounts of each of maltitol (2%, 6%, 10%) and inulin (2, 4.35, 6.7). The amount of DE28 corn syrup for each maltitol / inulin combination was chosen so that the ice creams all had the same ice content. The combinations are shown in Table 3, together with the amounts of digestible and non-digestible complex saccharides, and sugars present in each. The sugars come from the lactose in the skimmed milk powder and the mono- and disaccharides present in the corn syrup and inulin.

Table 3 Composition of each maltitol / inulin / DE 28 corn syrup combination.

| Example | Maltitol | Inulin | DE 28 Corn Syrup | Digestible complex saccharides | Non-digestible complex saccharides | Total Sugars |
|---|---|---|---|---|---|---|
| 1 | 10.0 | 6.7 | 8.0 | 6.60 | 5.9 | 5.3 |
| 2 | 10.0 | 4.35 | 10.3 | 8.50 | 3.8 | 5.4 |
| 3 | 10.0 | 2.0 | 12.4 | 10.2 | 1.8 | 5.5 |
| 4 | 6.0 | 6.7 | 13.7 | 11.3 | 5.9 | 6.0 |
| 5 | 6.0 | 4.35 | 16.0 | 13.2 | 3.8 | 6.2 |
| 6 | 6.0 | 2.0 | 18.0 | 14.9 | 1.8 | 6.3 |
| 7 | 2.0 | 6.7 | 19.4 | 16.0 | 5.9 | 6.8 |
| 8 | 2.0 | 4.35 | 21.5 | 17.8 | 3.8 | 6.9 |
| 9 | 2.0 | 2.0 | 23.6 | 19.5 | 1.8 | 7.0 |

Comparative example A, a conventional ice cream, was also prepared, using the same base formulation, but with 11.5% sucrose and 11.66% DE 63 corn syrup instead of the maltitol, DE 28 corn syrup and inulin.

All ingredients except from the oil and emulsifier were combined in an agitated heated mix tank. The oil was warmed to around 60°C and then the emulsifier added to the liquid fat prior to pouring into the mix tank. Once all of the ingredients were blended together, the mix was subjected to high shear mixing at a temperature of 65°C for 2 minutes. The mix was then passed through an homogeniser at 150 bar and 70°C and then subjected to pasteurisation at 83°C for 20 s before being rapidly cooled to 4°C by passing through a plate heat exchanger. The premix was then aged at 4°C for 5 hours in an agitated tank prior to freezing.

Each formulation was frozen using a typical ice cream freezer (scraped surface heat exchanger) operating with an open dasher (series 15), a mix flow rate of 150 litres / hour, an extrusion temperature of -7°C and an overrun of 100%. Directly from the freezer, the ice cream was filled into 250 ml cartons. The cartons were then hardened by blast freezing for 2 hours at -30°C before being transferred to a -25°C store for storage.

The ice creams (examples 1 to 9) were assessed by a trained sensory panel and compared with comparative example A. The panel consisted of 15 panellists who had been screened and selected for their sensory acuity. The panel had been trained in describing and objectively assessing the sensory attributes of a range of ice cream products. The key sensory attributes considered were firmness in mouth and sweetness. The day before panelling the blocks were cut into equally sized portions which were place into pots. The samples were then tempered to the serving temperature (-18°C) for 24 hours prior to panelling. The panellists consumed samples of each product. The test design was balanced for serving order of the samples, and each product was assessed (blind) 3 times by each assessor. The firmness was assessed by pressing the sample between the tongue and palate. Samples were scored on a scale of 0 to 10 (where 0 is not firm / sweet and 10 is very firm / sweet). A series of data and panellist monitoring techniques were performed on the data output, and these indicated that a robust dataset had been obtained. The results are shown in Table 4.

Table 4 Sensory measurements

| Example | Firmness | Sweetness |
|---|---|---|
| 1 | 6.3 | 4.6 |

(continued)

| Example | Firmness | Sweetness |
|---|---|---|
| 2 | 6.1 | 4.6 |
| 3 | 5.9 | 4.4 |
| 4 | 6.7 | 4.2 |
| 5 | 7.0 | 4.2 |
| 6 | 6.8 | 4.2 |
| 7 | 7.5 | 3.7 |
| 8 | 7.3 | 3.7 |
| 9 | 7.9 | 3.8 |
| Comparative A | 4.7 | 5.9 |

All of the ice creams had acceptable taste and texture. Examples 1 to 9 were somewhat firmer and less sweet than the standard ice cream (comparative example A). The data shows that firmness in mouth decreased and the sweetness increased with higher levels of maltitol. For a fixed maltitol level, the amount of inulin had little effect on sweetness or firmness. The highest maltitol levels (10%) were judged to give the best ice creams. These formulations had a surprisingly creamy and indulgent taste. Nonetheless all the examples were judged to be acceptable products.

Examples 10-18 - Water ices

Example water ices according to the invention were also prepared using maltitol, DE 28 corn syrup and inulin. The water ices were prepared using the base formulation shown in Table 5.

Table 5 Water ice base formulation

| Ingredient | Amount (wt %) |
|---|---|
| Maltitol | Given in table 6 |
| Inulin | Given in table 6 |
| DE28 corn syrup | Given in table 6 |
| Locust Bean Gum | 0.20 |
| Citric acid | 0.25 |
| Water | to 100 |

Again, nine different combinations were used: three different amounts of each of maltitol and inulin. The amount of DE28 corn syrup for each maltitol / inulin combination was chosen so that the water ices all had the same ice content. The combinations are shown in Table 6, together with the amounts of digestible and non-digestible complex saccharides, and sugars present in each. The sugars come from the low molecular weight components present in the corn syrup and inulin.

Table 6 Composition of each maltitol / inulin / DE 28 corn syrup combination.

| Example | Maltitol | Inulin | DE28 Corn Syrup | Digestible complex saccharides | Non-digestible complex saccharides | Total Sugars |
|---|---|---|---|---|---|---|
| 10 | 10.0 | 6.7 | 11.0 | 9.1 | 5.9 | 2.0 |
| 11 | 10.0 | 4.35 | 13.0 | 10.7 | 3.8 | 2.1 |
| 12 | 10.0 | 2.0 | 15.0 | 12.4 | 1.8 | 2.2 |
| 13 | 6.0 | 6.7 | 16.5 | 13.6 | 5.9 | 2.7 |
| 14 | 6.0 | 4.35 | 18.5 | 15.3 | 3.8 | 2.8 |

(continued)

| Example | Maltitol | Inulin | DE28 Corn Syrup | Digestible complex saccharides | Non-digestible complex saccharides | Total Sugars |
|---|---|---|---|---|---|---|
| 15 | 6.0 | 2.0 | 20.5 | 16.9 | 1.8 | 2.9 |
| 16 | 2.0 | 6.7 | 22.0 | 18.2 | 5.9 | 3.5 |
| 17 | 2.0 | 4.35 | 24.0 | 19.8 | 3.8 | 3.6 |
| 18 | 2.0 | 2.0 | 26.0 | 21.5 | 1.8 | 3.7 |

Comparative example B, a conventional water ice was also prepared, using the same base formulation, but with 16.7% sucrose and 5.47% dextrose (glucose) instead of the maltitol, DE 28 corn syrup and inulin.

Water ice products in the form of ice lollies (approximately 100mls in volume) on sticks were prepared as follows. First the dry ingredients were mixed with hot water and stirred until they had completely dissolved. The mix was then pasteurized and placed in moulds. The moulds were immersed in a brine bath at -40°C to quiescently freeze the mix and sticks were inserted. After the products had frozen, they were removed from the moulds and stored at -18°C before being subjected to sensory assessment.

The water ices (examples 10 to 18) were also assessed by a trained sensory panel and compared with the standard (comparative example B). The key sensory attributes considered were hardness (assessed by biting the end off with the front teeth) and sweetness. Samples were again scored on a scale of 0 to 10 (where 0 is not hard / sweet and 10 is very hard / sweet). The results of the sensory analysis are shown in Table 7.

Table 7 Sensory measurements

| Example | Hardness | Sweetness |
|---|---|---|
| 10 | 3.5 | 5.4 |
| 11 | 4.1 | 5.1 |
| 12 | 4.9 | 4.5 |
| 13 | 3.6 | 4.7 |
| 14 | 5.6 | 4.2 |
| 15 | 6.0 | 4.0 |
| 16 | 5.8 | 3.4 |
| 17 | 6.7 | 3.0 |
| 18 | 7.4 | 2.9 |
| Comparative B | 1.8 | 7.5 |

All of the water ices had acceptable taste and texture. Examples 10 to 18 were somewhat harder and less sweet than the standard water ice. The data show that hardness decreased and the sweetness increased with higher levels of maltitol. At any given maltitol level, increasing the amount of inulin made the water ices sweeter and less hard. The highest maltitol level in combination with the highest amount of inulin (example 10) was judged to be most similar to the standard water ice. Nonetheless all the examples were judged to be acceptable products.

Conclusions

By carefully selecting the type and amounts of maltitol, digestible and non-digestible complex saccharides, ice creams and water ices with very low sugar contents and acceptable sweetness and texture were obtained, without needing to use high intensity sweeteners.

**Claims**

1. A frozen confection comprising (by weight of the confection)

- less than 9 wt% total digestible mono- and disaccharides;
- maltitol, xylitol or mixtures thereof in a total amount of from 2 to 15 wt%;
- from 5 to 25 wt% digestible complex saccharides;
- from 1 to 15 wt% non-digestible complex saccharides;

and less than ($X / R$) wt% of intense sweeteners,
wherein $X$ is 2.0 wt% and $R$ is the sweetness of the intense sweeteners relative to sucrose expressed on a weight basis,
wherein the frozen confection is a water ice.

2. A frozen confection according to claim 1 comprising less than 8 wt% total digestible mono- and disaccharides.

3. A frozen confection according to claim 1 or claim 2 comprising from 8 to 15 wt% maltitol.

4. A frozen confection according to any of claims 1 to 3 comprising from 5 to 10 wt% digestible complex saccharides.

5. A frozen confection according to any of claims 1 to 4 comprising from 5 to 10 wt% non-digestible complex saccharides.

6. A frozen confection according to of claims 1 to 5 wherein the non-digestible complex saccharide is selected from the group consisting of oligofructose, inulin, polydextrose, resistant starch and mixtures thereof.

7. A frozen confection according to any of claims 1 to 6 wherein X is 0.1wt%.

8. A frozen confection according to any of claims 1 to 7 comprising less than 1 wt% fructose.


**Patentansprüche**

1. Gefrorene Süßware, umfassend (auf Gewicht der Süßware)

- weniger als 9 Gew.-% gesamte verdauliche Mono- und Disaccharide;
- Maltitol, Xylitol oder Mischungen davon in einer Gesamtmenge von 2 bis 15 Gew.-%;
- 5 bis 25 Gew.-% verdauliche komplexe Saccharide;
- 1 bis 15 Gew.-% nichtverdauliche komplexe Saccharide;

und weniger als (X/R) Gew.-% intensive Süßungsmittel,
wobei X 2,0 Gew.-% ist und R die Süße des intensiven Süßungsmittels relativ zu Sucrose, ausgedrückt auf Gewichtsbasis, ist,
wobei die gefrorene Süßware ein Wassereis ist.

2. Gefrorene Süßware nach Anspruch 1, umfassend weniger als 8 Gew.-% gesamte verdauliche Mono- und Disaccharide.

3. Gefrorene Süßware nach Anspruch 1 oder 2, umfassend 8 bis 15 Gew.-% Maltitol.

4. Gefrorene Süßware nach irgendeinem der Ansprüche 1 bis 3, umfassend 5 bis 10 Gew.-% verdauliche komplexe Saccharide.

5. Gefrorene Süßware nach irgendeinem der Ansprüche 1 bis 4, umfassend 5 bis 10 Gew.-% nichtverdauliche komplexe Saccharide.

6. Gefrorene Süßware nach irgendeinem der Ansprüche 1 bis 5, wobei das nichtverdauliche komplexe Saccharid aus der aus Oligofructose, Inulin, Polydextrose, resistenter Stärke und Mischungen davon bestehenden Gruppe ausgewählt ist.

7. Gefrorene Süßware nach irgendeinem der Ansprüche 1 bis 6, wobei X 0,1 Gew.-% ist.

8. Gefrorene Süßware nach irgendeinem der Ansprüche 1 bis 7, umfassend weniger als 1 Gew.-% Fructose.

**Revendications**

1. Confiserie surgelée comprenant (en poids de la confiserie)

   • moins de 9 % en poids de mono- et disaccharides digestibles totaux ;
   • du maltitol, du xylitol ou des mélanges de ceux-ci en une quantité totale de 2 à 15 % en poids ;
   • de 5 à 25 % en poids de saccharides complexes digestibles ;
   • de 1 à 15 % en poids de saccharides complexes non digestibles ;

   et moins de ($X/R$) % en poids d'édulcorants intenses,
   rapport dans lequel $X$ vaut 2,0 % en poids et $R$ représente la sucrosité des édulcorants intenses par rapport au sucrose exprimée sur une base pondérale,
   la confiserie surgelée étant une glace à l'eau.

2. Confiserie surgelée selon la revendication 1 comprenant moins de 8 % en poids de mono- et disaccharides digestibles totaux.

3. Confiserie surgelée selon la revendication 1 ou la revendication 2 comprenant de 8 à 15 % en poids de maltitol.

4. Confiserie surgelée selon l'une quelconque des revendications 1 à 3 comprenant de 5 à 10 % en poids de saccharides complexes digestibles.

5. Confiserie surgelée selon l'une quelconque des revendications 1 à 4 comprenant de 5 à 10 % en poids de saccharides complexes non digestibles.

6. Confiserie surgelée selon l'une quelconque des revendications 1 à 5 dans laquelle le saccharide complexe non digestible est choisi dans le groupe constitué de l'oligofructose, de l'inuline, du polydextrose, de l'amidon résistant et des mélanges de ceux-ci.

7. Confiserie surgelée selon l'une quelconque des revendications 1 à 6 dans laquelle X vaut 0,1 % en poids.

8. Confiserie surgelée selon l'une quelconque des revendications 1 à 7 comprenant moins de 1 % en poids de fructose.

**EP 1 891 863 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4626441 A

- US 4400405 A

### Non-patent literature cited in the description

- Report of a Joint WHO/FAO Expert Consultation. *WHO Technical Report Series 916,* 2003

- **ROBERT T. MARSHALL ; H. DOUGLAS GOFF ; RICHARD W. HARTEL.** Ice Cream. Kluwer Academic/Plenum Publishers, 2003